# EUROPEAN PATENT SPECIFICATION

(11) **EP 2 279 826 B1**
(45) Date of publication and mention of the grant of the patent: **23.04.2014**
(21) Application number: 09754483.7
(22) Date of filing: 17.02.2009
(51) Int. Cl.: B23K 1/00, B22F 7/06, B23K 35/02, F01D 5/00, C22C 19/05, C22C 19/07, B23P 6/04, B23K 35/30, F01D 25/00, F02C 7/00

(54) **BRAZING REPAIR MATERIAL AND BRAZING REPAIR METHOD USING THE BRAZING REPAIR MATERIAL**
LÖTREPARATURMATERIAL UND LÖTREPARATURVERFAHREN UNTER VERWENDUNG DES LÖTREPARATURMATERIALS
MATÉRIAU DE RÉPARATION DE BRASURE ET PROCÉDÉ DE RÉPARATION DE BRASURE À L'AIDE DU MATÉRIAU DE RÉPARATION DE BRASURE

(30) Priority: 27.05.2008 JP 2008138161
(43) Date of publication of application: 02.02.2011
(73) Proprietor: Kabushiki Kaisha Toshiba, Minato-ku Tokyo 105-8001 (JP)
(72) Inventor: YOSHIOKA, Yomei, Tokyo 105-8001 (JP); FUSE, Toshiaki, Tokyo 105-8001 (JP); SAITO, Daizo, Tokyo 105-8001 (JP); TAKAKU, Reki, Tokyo 105-8001 (JP); KITAYAMA, Kazuhiro, Tokyo 105-8001 (JP); ISHIBASHI, Kazutoshi, Tokyo 105-8001 (JP)
(74) Representative: Kramer - Barske - Schmidtchen
(86) International application number: PCT/JP2009/052649
(87) International publication number: WO 2009/144975

(56) References cited:
- EP-A1- 1 623 787
- EP-A1- 1 967 312
- WO-A2-02/50323
- GB-A- 803 253
- GB-A- 860 733
- GB-A- 1 016 629
- JP-A- 2006 046 147
- JP-A- 2006 328 535
- JP-T- 2005 500 908
- US-A1- 2007 051 199

## Description

### Technical Field

The present invention relates to a brazing repair material and a brazing repairing method using the material, and more particularly, to the brazing material and the brazing repairing method capable of effectively repairing and regenerating a high temperature part such as a gas turbine stationary blade (stator vane) which is damaged by thermal fatigue caused by starting or stopping operation of the gas turbine. The high temperature parts are also damaged by creep deformation, fatigue defect, thermal degradation, oxidation, corrosion, erosion that are caused by exposing the parts to a high temperature atmosphere. The high temperature parts are also damaged by collision with an incoming foreign substance.

### Background Art

A gas turbine power plant is configured such that air for burning a fuel is compressed by driving a compressor which is coaxially provided on a gas turbine. The compressed air is then introduced into a combustor, and the air is mixed with fuel and the mixture of air and the fuel are burned thereby to generate combustion gas. The generated combustion gas having a high-temperature is introduced to a movable blade (rotor vane) of the gas turbine through a transition piece and a stationary blade, so that the movable blade is rotated and driven to do work in the gas turbine whereby a power generator directly connected to the gas turbine is rotated to generate electricity.

When the turbine stationary blade, a combustor liner and the transition piece which are high temperature parts are cracked or frayed (worn-out), such defected portions of the parts are brazed and welded, or diffusion brazed and repaired, and the repaired parts are continuously used thereafter. At the time of such repairing operation, thermal processing (heat treatment) for removing thermal influence or residual stress at the time of welding is carried out as occasion demand.

As conventional diffusion brazing repairing technique, U.S. Patent No. 5320690 has proposed a "Process for Repairing Co-based Superalloy using Co-based Brazing Compositions" and Japanese Patent Application Laid-open No. 4-254544 has proposed a "Modified High Temperature Brazing Alloy and Using Method Thereof".

As modified methods of improving mechanical properties using a hot isostatic pressing (HIP) processing, Japanese Patent Application Laid-open No. 57-207163 has proposed a "Modified Method of Mechanical Properties of Alloy Part" and Japanese Patent Application Laid-open No. 11-210138 has proposed a "Recovering Processing Method Deterioration or Damage of Gas Turbine Part and Gas Turbine Part Subjected to This Processing". The former publication is for eliminating creep void generated by the operation of the gas turbine, and the latter publication is for recovering a structure deteriorated by the operation of the gas turbine.

As one example of regenerating technique of a stationary blade (stator vane), concerning a method of eliminating a defect caused at the time of repairing operation, there has been well known Japanese Patent Application Laid-open No. 57-62884 which discloses a "Welding Processing Method". An object of the method described in the above patent document is to eliminate a welding defect generated when butt jointed portions between a rotor wheel and movable blade (rotor vanes) implanted in the rotor wheel are butt-welded to each other. The welding defect is eliminated by performing a HIP (hot isostatic pressing) treatment to the defected portion.
[Patent Document 1] U.S. Patent No.5320690
[Patent Document 2] Japanese Patent Application Laid-open No. 4-254544
[Patent Document 3] Japanese Patent Application Laid-open No. 57-207163
[Patent Document 4] Japanese Patent Application Laid-open No. 11-210138
[Patent Document 5] Japanese Patent Application Laid-open No. 57-62884

EP 1 623 787 A1 relates to a method of regenerating a gas-turbine stator vane composed of a base material and having cracks formed in the base material and an oxidized layer formed at a surface portion of the base material, the method comprising the steps of grinding the oxidized layer and the cracks so that a part of the cracks remains to form a ground portion, filling an equivalent material and a brazing material into said ground portion thereby to form a filled portion, said equivalent material having an equality with said base material for the stator vane, and said brazing material having a melting point lower than that of said equivalent material, heat treating said filled portion under pressurized inert gas atmosphere so as to melt the brazing material, performing brazing treatment by diffusing the molten brazing material into the cracked portions, wherein said equivalent material has a composition containing 20 to 35 wt% of Cr, 5 to 60 wt% of Ni, 0.5 to 2 wt% of Fe, 5 to 10 wt% of W, 0.1 to 0.5 wt% of C, 0.005 to 2 wt% of B, and balance of Co, while said brazing material has a composition containing 10 to 40 wt% of Cr, 8.5 to 70 wt% of Ni, 0.5 to 2 wt% of Fe, 9 wt% or less (including 0 %) of W, 0.001 to 0.6 wt% of C, 0.01 to 3.5 wt% of B, 1.0 to 11 wt% of Si, 2 wt% or less (not including 0 %) of Mn, and balance of Co.

GB 803,253 A discloses a cobalt-containing brazing alloy consisting of 0 % to 0.5 % C, from 40 % to 85 % Ni, 0 % to 20 % Cr, from 2 % to 5 % B, from 1 % to 5 % Si, 0 % to 15 % Fe, and Co in an amount sufficient to markedly reduce the diffusion of the alloy into stainless steel when the alloy is used to braze honeycomb cores of stainless steel to the skins of structures, the Co constituting from 5 % to 50 % of the alloy.

GB 860,733 A discloses an alloy containing 0 to 1 % C, 0.25 to 5 % B, 0.1 to 5 % Si, one or more of the three elements Ti, Nb and Ta, in an amount sufficient to eliminate the diffusion of the alloy into stainless steel, when used to braze stainless steel parts, Ti, when present, being present in an amount of from 0.05 to 2 %, Nb, when present, being present in an amount of from 0.5 to 5 %, and Ta, when present, being present in an amount of from 0.5 to 5 %, the remainder being nickel.

### Disclosure of Invention

Such the high temperature part of the gas turbine, especially a first-staged stationary blade (stator vanes) disposed at a combustion gas inlet of the turbine is exposed to the combustion gas having the highest temperature, so that there would be inevitably and frequently generated many cracks caused mainly by thermal fatigue raised at the time of starting and stopping operation of the gas turbine. Therefore, Co-based alloy having excellent heat resistance property and excellent repairing property has been used for constituting the stationary blade for a long term up to now.

When these cracks, oxidation erosions or wears are generated, such damaged portions are welded and repaired by using TIG welding method and the repaired parts are continuously used. However, as an operating temperature of the gas turbine is increased to be a higher temperature so as to realize a higher efficiency, the repaired amount is disadvantageously increased. This repaired portion is liable to be deformed by thermal influence and residual stress that are generated at the time of welding performed in the repairing operation, and the amount of the deformation has reached to such a large value level that it is difficult to correct the deformation by subsequent various deformation correcting processes.

In contrast, according to the repairing method by means of the diffusion brazing operation, there is prepared a brazing material (molten alloy powder) in which melting- point- lowering material such as Si and B or the like is added to material having a composition similar to that of a base material and there is also prepared a composition material (non-molten alloy powder) having a strength corresponding to that of the base material. Then, the brazing material (molten alloy powder) and the composition material (non-molten alloy powder) are mixed at a predetermined mixing ratio to prepare a repair material, and the mixed material (repair material) is charged into the defected portions such as a crack or a thin portion (reduced-thickness portion). Then, the defected portions charged with the mixed material are subjected to a heat treatment at thermal processing temperature lower than a melting point of the base material, whereby the cracks are filled with the mixed material and the thin portion is built up and thickened.

Conventionally, in order to enhance the oxidation resistance of a portion to be repaired, Al is added to the repair material, especially non-molten alloy powder in many cases. However, alumina (Al₂O₃) is unavoidably formed by reacting Al with oxygen included in the base material at an interface between the defected portion to be repaired and the base material forms, so that alumina (Al₂O₃) forms a spider-web-shaped film (network-shaped film). Therefore, there has been posed a problem that the adhesion strength is largely deteriorated. Further, it is difficult to reduce or deoxidize such aluminum oxide by means of H₂ gas which is a simple reducing method, and there has been posed a problem that this oxide reducing method cannot be easily applied.

The present invention has been accomplished in view of the above circumstances, and it is an object of the invention to provide a brazing repair material and a brazing repairing method using the repair material capable of diffusion brazing repairing, in a vacuum, a closed crack generated on a surface of a high temperature part of a gas turbine stationary blade which is deteriorated or damaged by operation of an actual machine without completely removing the closed crack by means of chipping or the like, and capable of recovering inherent properties of the high temperature part corresponding to those of the original base material by conducting a pressurizing treatment under a high temperature inert gas atmosphere.

To achieve the above object, the present inventors obtained the following technical findings and achieved the present invention. That is, what factor governs lifetime of the high temperature part such as a gas turbine stationary blade is "deformation" caused by welding and repairing operation. Then, as the processing method for preventing the deformation caused by the repairing operation, the present inventors had developed the repairing technique using both the vacuum brazing processing and pressurized compacting (densifying) processing such as HIP treatment.

According to this repairing technique, an alumina (Al₂O₃) oxidation layer is formed at the interface between the base material and the repair material by thermal processing at the time of brazing using a gas, especially oxygen contained in the base material. The content of the oxygen is increased by the continuous operation of the gas turbine. The alumina (Al₂O₃) oxidation layer deteriorates the bonding strength of the repair material.

Therefore, in order to prevent the bonding strength of the repair material from being deteriorated, a material containing no Al (Al free material) is used as the repair material, which is capable of being subjected to hydrogen cleaning so that the repairing operation can be carried out repeatedly.

It is effective to carry out the highly densifying process by utilizing the hot isostatic pressing (HIP) treatment so as to improve the fatigue strength of a portion to be repaired (hereinafter referred as "repairing portion"). At the time of brazing operation, paste should not be mixed into the repair material, a weir (bank) is provided around the repairing portion to prevent the repair material from flowing so that the above processing effect can sufficiently be exhibited. Under this condition, the repair material in a form of powder is charged into the weir, and the blazing treatment is conducted. As a result, the repair material does not flow out, and the repairing portion can be highly compacted and densified.

Concerning the mixing ratio of non-molten alloy powder such as Co-based alloy constituting the brazing repair material and molten alloy powder such as Co-based or Ni-based alloy, when the weight ratio of the non-molten alloy powder is set to 0.8 times or more of the molten alloy powder and the particle diameter of the non-molten alloy powder is set to two times or more of the molten alloy powder, the charging degree (filling-up degree) of the brazing repair material into the repairing portion can be enhanced.

A cold spray method in which the repair material is sprayed at a high speed onto a repairing portion by carrier gas having temperature of 800°C or less can be employed as the method of charging the brazing repair material. According to this cold spray method, it becomes possible to spray, charge and fix the repair material onto the repairing portion including an inside of the crack.

In addition, it becomes possible to solve a problem that the finishing precision degree of the repaired portion is largely varied due to difference in inclination state (installation angle) of a treating surface of the repairing portion at the time of thermal processing.

The present invention has been completed based on the above-described technical findings. That is, the present invention provides an Al-free brazing repair material which is used in a repairing operation in which the brazing repair material is charged into a repairing portion of a base material having a defect including a crack and corrosion, and a diffusion heat treatment is carried out whereby the brazing repair material is integrally bonded to the repairing portion so as to repair the defective repairing portion, wherein the brazing repair material is composed of a mixture comprising: non-molten alloy powder having a composition similar to that of the base material; and molten alloy powder which is melted at a temperature of the diffusion heat treatment, wherein the molten alloy powder is a brazing repairing alloy and consists of 0.001 to 0.05 mass% of C, 2.5 to 4.5 mass % of Si, 12 to 20 mass % of Cr, 17 to 23 mass % of Co, 2 to 4 mass % of B, the balance being Ni and inavoidable impurities, and a constitution ratio [Si+1.5×(C+B)] of the components is 6 or more and 9 or less, and wherein the non-molten alloy powder consists of 10 to 25% Ni by mass, 15 to 45% Cr by mass, 6 to 8% Ta by mass, 0.1 % or less W by mass, 0.05% or less C by mass, the balance being Co and inavoidable impurities.

In the above brazing repair material, it is also preferable that the non-molten alloy powder includes 0.001 to 0.01% of C by mass and 18 to 25% of Cr by mass.

In the above brazing repair material, it is preferable that the molten alloy powder is prepared by adding 2 to 5 mass % of Si and 1 to 5 mass % of B to the non-molten alloy powder.

The present invention provides a brazing repairing method comprising:
a step of carrying out inspection of a base material of a gas turbine part in which a defect including a crack and corrosion is generated after operating the gas turbine, followed by disassembling and cleaning a surface portion of the base material, followed by performing solution heat treatment to the base material, followed by chipping the surface portion and a bottom of a penetrating crack, followed by removing an oxide layer from the surface portion of the base material, and followed by conducting a preliminary process of TIG drip-preventing processing for the penetrating crack;
a step of forming a flow-preventing surrounding for a brazing repair material around a repairing portion;
a step of charging the brazing repair material according to claim 1 or 2 into the flow-preventing surrounding, the brazing repair material comprising a mixture of non-molten alloy powder having a composition similar to that of the base material and molten alloy powder which is melted at a temperature of diffusion heat treatment;
a brazing repairing step of repeating, a plurality of times, the diffusion heat treatment at a temperature equal to or lower than a melting point of the base material of the gas turbine part and equal to or higher than a melting point of the molten alloy powder, thereby integrally bonding the brazing repair material to the repairing portion, and for compacting and densifying the brazing repair material by conducting a heat treatment under pressurized atmosphere;
a step of carrying out finishing processing including inspection of a brazing repaired portion, additional repairing operation of partial defective portion and repairing processing of a cooling hole;
a step of carrying out solution treatment and aging heat treatment for the repaired portion subjected to the finishing processing; and
a step of re-assembling the repaired gas turbine parts.

In the above brazing repairing method, it is preferable that a weight ratio of the non-molten alloy powder of the brazing repair material is set to 0.8 times or more of the molten alloy powder, and a particle diameter of the non-molten alloy powder is set to 2 times or more of the molten alloy powder, thereby enhancing a charging degree of the brazing repair material to the repairing portion, and enhancing flowability of the molten alloy powder in the non-molten powder and tip end portion of the crack.

In the above brazing repairing method, it is preferable that the weight ratio of the non-molten alloy powder of the brazing repair material with respect to the brazing repair material is set to 1 to 1.5 times of the molten alloy powder.

In the above brazing repairing method, it is preferable that the brazing repairing step is carried out by hot isostatic press (HIP), a heating temperature is set to 1000°C or higher and 1300°C or lower, a pressurizing force is set to 1000 atm pressure or higher and 2000 atm pressure or lower, and the solution treatment and aging treatment are carried out after the brazing repairing step.

In the above brazing repairing method, it is preferable that the heating temperature in the hot isostatic press (HIP) is set to 1100°C or higher and 1260°C or lower.

In the above brazing repairing method, it is also preferable that a crack is formed in the to-be repaired portion, and composition of the brazing repair material charged into the crack becomes closer to composition of the molten alloy powder toward a tip end of the crack from a surface side thereof.

In the above brazing repairing method, it is preferable that as a charging method of the brazing repair material to the repairing portion, the brazing repair material is carried using high velocity carrier gas flow at 800°C or lower at which the alloy powder is not melted or oxidized, particle velocity of the brazing repair material is set to 300m/sec or higher, and the brazing repair material is adhered to the repairing portion or charged into the crack.

According to the brazing repair material of the above configuration and the brazing repairing method using the brazing repair material, since the brazing repair material comprising non-molten alloy powder having a composition similar to that of the base material of part and molten alloy powder having a predetermined composition is used, it is easy to repair and regenerate a high temperature part in which a failure and defective such as a crack and corrosion is generated, and it is also possible to largely enhance the operation economy and maintainability of a gas turbine which uses high temperature parts as constituent material.

### Brief Description of the Drawings

Fig. 1 is a graph showing a test result of oxidation of a repaired portion which is repaired using brazing repair material according to the present invention and other repair materials.
Fig. 2 is a graph showing comparison data of creep strength of repaired portions repaired using the brazing repair material according to the present invention and other brazing repair materials.
Fig. 3 is a graph showing comparison of low cycle fatigue strength of repaired portions repaired using the brazing repair material according to the present invention and other repair materials.
Fig. 4 is a block diagram showing an example of construction process of the repairing technique using the brazing repair material according to the present invention.
Fig. 5 is a graph showing comparison of improvement effect of the low cycle fatigue strength when a repaired portion is subjected to the HIP processing and when the repaired portion is not subjected to the HIP processing.
Fig. 6 is a schematic sectional view showing a distribution state of non-molten alloys and molten alloys in a repaired portion repaired by a diffusion brazing repairing method.
Fig. 7 is a conceptual diagram showing an example of a structure of a non-molten coating apparatus.
Fig. 8 is a graph showing a relationship between particle velocity and adhesion efficiency of the particle when brazing repair material is made collide against and adhere to a base material surface at high velocity using non-molten coating apparatus.
Fig. 9 is a graph showing a relationship between the particle velocity and nozzle outlet temperature of the non-molten coating apparatus.
Fig. 10 is a graph showing a relationship between spray efficiency of brazing repair material powder and powder particle diameter when the brazing repair material is made collide against and adhere to the base material surface at high velocity using the non-molten coating apparatus.

### Best Mode for Carrying Out the Invention

Examples of a brazing repair material and a brazing repairing method using the brazing repair material according to the present invention will be explained below.

Material constituting a repairing part to which the present invention is applied is mainly Co-based alloy which is high strength and temperature resistant material. A typical material thereof is FSX414 material and has the composition shown in Table 1 hereunder. Non-molten alloy constituting the brazing repair material defined in the present invention has a composition similar to that of the base material of the above part.

**[Table 1]**

| C | Mn | Si | Ni | Cr | W | Fe | Co | B |
|---|---|---|---|---|---|---|---|---|
| 0.26 | 0.42 | 0.78 | 10.59 | 29.53 | 7.04 | 0.62 | **Bal.** | 0.012 |

It is necessary that the molten alloy constituting the brazing repair material defined in the invention is stable in terms of structure even after this molten alloy is alloyed with non-molten alloy which has a composition similar to that of the above part base material, and the properties are the same. In order to stabilize the structure of the molten alloy after the brazing repairing operation, the molten alloy includes Ni which is austenite stabilizing element as a base component, and includes 12% or more of chromium (Cr) by mass so as to enhance the oxidation resistance. In order to stabilize the austenite structure, the Cr content is set in a range of 12% or more and 20% or less.

Further, cobalt (Co) in a range of 17% or more and 23% or less is added also in a fused portion between the base material and the non-molten alloy powder as a component for stabilizing the structure. Boron (B) lowers the melting point of the molten alloy and enhances wettability and flowability at the time of diffusion heat treatment of the molten alloy powder, and 2% or more of boron (B) is added. In order to prevent boride phase from being formed, the upper limit of an amount of boron is set to 4% or less, such that B is added in a range of 2% or more and 4% or less.

Further, both carbon(C) and silicon (Si) are also added to obtain the melting point lowering effect of molten alloy. In view of the melting point lowering effects of the C and Si, the melting point is set such that it becomes equal to the diffusion heat treatment temperature so that a melting point becomes lower than a melting point of the base material by about -50 to -100°C. Concretely, the content of C is set within a range of 0.001 to 0.05%, while the content of Si is set within a range of 2.5 to 4.5%, wherein a calculated value of Si + 1.5 × (C+B) is set to become 6 or more and 9 or less.

Composition of non-molten powder constituting the brazing repair material defined in the invention is similar to that of FSX414 material which is base material and prevents a problem caused by difference in conflation with respect to the base material and properties after completion of the repairing operation. As a concrete composition of the non-molten powder, 15 wt% or more Cr is added to secure excellent oxidation resistance, and when the content thereof exceeds 45 wt%, σ phase is deposited and precipitated, so that metal structure becomes unstable, and thus, the upper limit of Cr content is limited to 45% or less. The Cr content is preferably set within a range of 18% or more and 25% or less.

Further, Ni is effective element to stabilize the austenitic structure in a low temperature region, so that 10 wt% or more of Ni is added. However, if more than 25% of Ni is added, the strength in the high temperature region is disadvantageously deteriorated. Therefore, the amount of Ni to be added is set to 25 wt% or less.

In a case of a base material having a heat resistance property, about 7 wt% of W is usually added. However, in the present invention, Ta of the same amount (6 to 8%) is added instead of W so as to avoid the instability of structure caused by formation of σ phase, to adjust the melting point of the non-molten powder, and to enhance the precipitation strengthening by carbon.

As the base material, the present invention can be applied not only to the FSX414 material, but also to other Co-based alloy or Ni-based alloy containing 15 to 30 wt% of Cr.

### (Example 1)

Each of molten alloy powders set for Examples and Comparative Examples having compositions shown in Table 2 were prepared. Concerning the molten alloy powders thus prepared, wettability as brazing material and stability of structure were evaluated based on a gap wettability test method adopted from wettability test methods of brazing material defined in Japanese Industrial Standards (JIS Z3191).

That is, based on the Standards, an inner tube B having outer diameter of 13.5mm and inner diameter of 8.5mm was inserted into an outer tube A having outer diameter of 19mm and inner diameter of 14mm. Then, 10g of the molten alloy powder was placed on a lower portion of the outer tube A. This assembly was heated to a temperature of 1200°C in a vacuum atmosphere and held for 30 minutes. Under this state, a rising height of each brazing material which risen in the gap between the inner and outer tubes by capillary action was measured, so that a brazing performance of each molten alloy powder was evaluated on the basis of a difference between a narrow portion and a wide portion of the gap and depending upon the rising height of each brazing material. A result of the test is shown in Table 2.

The stability of structure was evaluated depending upon presence or absence of formation of brittle and coarse boride phase by observing the structure after the gap wettability test. A result of evaluations is shown in Table 2.

**[Table 2]**

| Material | C | Si | Ni | Cr | Co | B | Si+1.5(C+B) | Gap Wettability Test Result | Structure Stability |
|---|---|---|---|---|---|---|---|---|---|
| Molten Alloy Powder 1 of This Invention | 0.002 | 3.9 | Bal. | 13.0 | 20.0 | 2.6 | 7.8 | ⊚ | ○ |
| Molten Alloy Powder 2 of This Invention | 0.001 | 3.0 | Bal. | 12.0 | 18.0 | 2.4 | 6.6 | ○ | ○ |
| Molten Alloy Powder 3 of This Invention | 0.003 | 3.0 | Bal. | 12.0 | 21.0 | 2.9 | 7.4 | ⊚ | ○ |
| Molten Alloy Powder 4* | 0.002 | 4.7 | Bal. | 12.0 | 20.0 | 2.4 | 8.3 | ○ | ○ |
| Comparative Alloy Powder 1 | 0.002 | 2.0 | Bal. | 13.0 | 20.0 | 4.0 | 8.0 | Δ | × |
| Comparative Alloy Powder 2 | 0.002 | 3.9 | Bal. | 13.0 | 20.0 | 4.0 | 9.9 | × | × |
| Ccmparative Alloy Powder 3 | 0.030 | 5.0 | Bal. | 14.0 | 22.0 | 3.0 | 9.5 | Δ | Δ |

| | | | | | | | | | |
|---|---|---|---|---|---|---|---|---|---|
| *Provided for comparative purposes only | | | | | | | | | |

As is apparent from the results shown in Table 2, among the molten alloy powder sets of the Examples of the present invention, the molten alloy powders each having component ratio defined by Si+1.5(C+B) close to 6 which is a lower limit value have a low rising height of brazing material which risen in the gap. If the component ratio reaches around 9, there is a tendency that the rising amount became great at a portion which has narrow gap between the inner tube and outer tubes. In contrast, the wide portion had a smaller rising amount, and its difference was increased.

Here, the test result was evaluated in such a manner that the molten alloy powder having both values satisfying reference values (standard values) is shown with a mark of ⊚, the molten alloy powder having any one of values close to the reference value is shown with a mark of ○, the molten alloy powder having one of values which does not satisfy the reference value is shown with a mark of Δ, and molten alloy powder having both values which do not satisfy the reference values are shown with a mark of ×.

It could be confirmed that the molten alloy powder sets of any of the Examples showed excellent wettability, and had excellent brazing performance as molten alloy powder. Further, it was also found that the amount of formation of coarse and brittle boride phase in the structure was small and stability of the structure was excellent.

### (Example 2)

Non-molten alloy powder sets for Examples and Comparative Examples having composition shown in Table 3(a) were prepared. Further, molten alloy powder sets for Examples and Comparative Examples having composition shown in Table 3(b) were prepared. The molten alloy powder and non-molten alloy powder were mixed at weight ratio of 5:7, thereby to prepare the respective brazing repair materials.

On the other hand, a base material composed of FSX414 material was formed with grooves each having width of 6mm, thereby to prepare a repairing portion (to-be repaired portion) as a test piece for the evaluation. Then, the brazing repair materials (mixed powder) were charged into the grooves. Thereafter, a diffusion heat treatment was carried out for 20 minutes at temperature of 1200°C and then, it was quenched. Subsequently, a solution heat treatment at a temperature of 1150°C for 4 hours and an aging heat treatment at a temperature of 982°C for 4 hours were carried out as thermal processing of the FSX414 base material, and characteristics of the repaired portion were evaluated.

As a molten alloy powder used for comparative non-molten alloy powder 8 shown in Table 3(b), an alloy powder which is prepared by adding the same amount of AI as the amount of molten alloy powder defined in the present invention was used.

After the repairing portions into which the brazing repair material was charged was subjected to the diffusion heat treatment, oxidation resistance, creep strength and low cycle fatigue lifetime of the repaired portion subjected to the solution heat treatment and the aging heat treatment were measured.

In this connection, the oxidation resistance of the repaired portion was measured as an oxidation- increased amount (g) when the repaired portion was heated to a temperature of 1000°C for 1000 hours. While, the creep strength was measured as a creep rupture time (h) in a state where a tensile stress of 103.4MPa was applied at a temperature of 816°C. The low cycle fatigue lifetime was measured as repeatable times of operation until total strain of 0.4% is generated at 816°C.

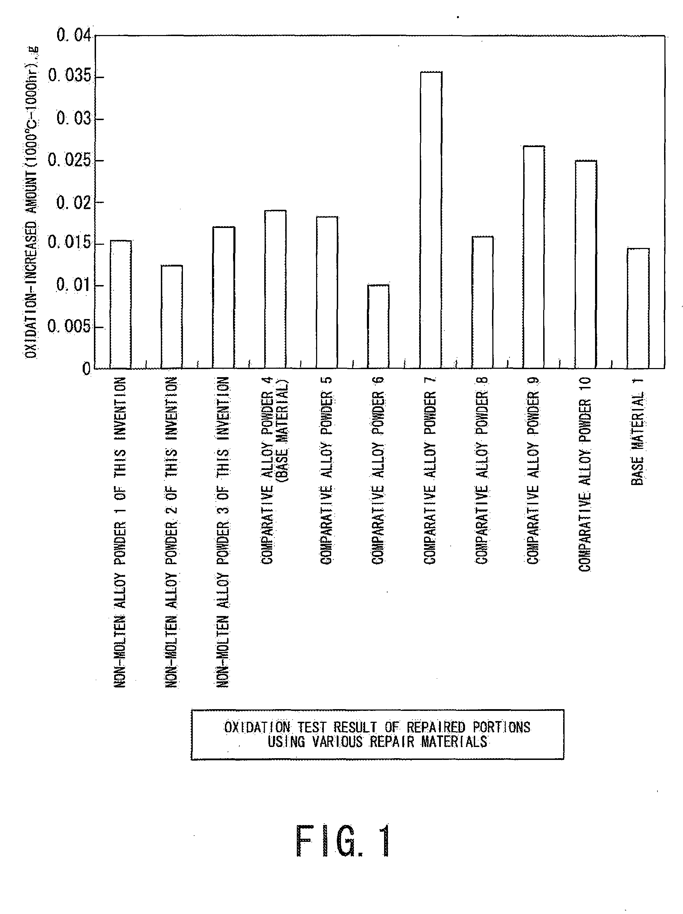

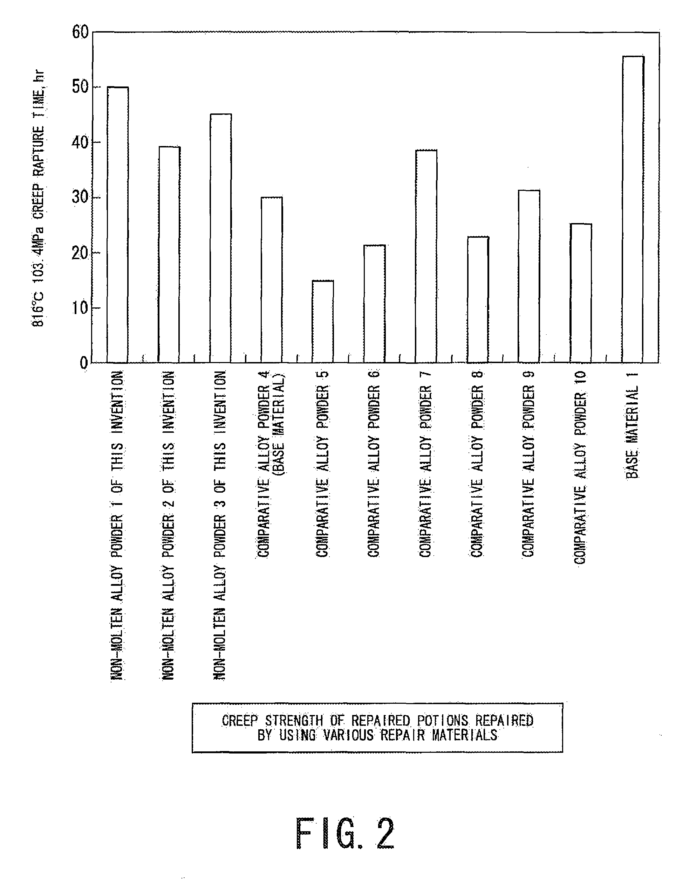

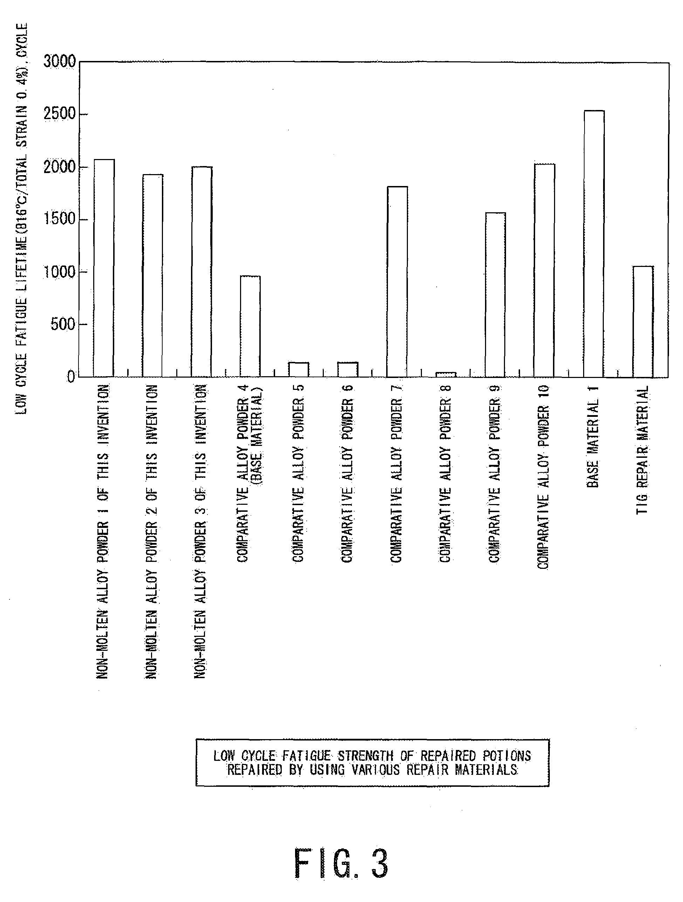

A result of measurements is shown in Table 3(a) and Figs. 1 to 3. In Table 3(a), a result in which the Comparative Example alloy powder sets were used and a result when only the base material per se was used as it was is shown. Further, a result obtained when the conventional TIG welding repairing operation was carried out is also shown in Table 3(a) and Fig. 3.

**[Table 3]**

| (a) | | | | | | | | | | | | |
|---|---|---|---|---|---|---|---|---|---|---|---|---|
| Material | C | Ni | Cr | W | Co | Ta | Fe | Al | Oxidation Resistance | Creep Strength | Low Cycle Fatigue Strength | Overall Evaluation |
| Non-molten Alloy Powder of This Invention 1 | 0.0026 | 20.70 | 19.20 | 0 | Bal. | 6.6 | 0 | 0.0 | ○ | ⊚ | ○ | ○ |
| Non-molten Alloy Powder of This Invention 2 | 0.0400 | 24.50 | 44.00 | 0 | Bal. | 7.5 | 0 | 0.0 | ⊚ | ○ | ○ | ○ |
| Non-molten Alloy Powder of This Invention 3 | 0.0010 | 10.00 | 15.00 | 0 | Bal. | 6.0 | 0 | 0.0 | ○ | ⊚ | ○ | ○ |
| Alloy Powder of Comparative Example 4 (Composition of Base Material) | 0.2600 | 10.60 | 29.50 | 7.04 | Bal. | 0 | 0.62 | 0.0 | ○ | Δ | × | × |
| Alloy Powder of Comparative Example 5 | 0.0030 | 30.00 | 20.00 | 0 | Bal. | 6.5 | 0 | 0.0 | ○ | Δ | × | × |
| Alloy Powder of Comparative Example 6 | 0.0030 | 15.00 | 49.00 | 0 | Bal. | 6.5 | 0 | 0.0 | ⊚ | Δ | × | × |
| Alloy Powder of Comparative Example 7 | 0.0020 | 21.00 | 10.00 | 0 | Bal. | 5.0 | | 0.0 | × | ○ | Δ | × |
| Alloy Powder of Comparative Example 8 | 0.0026 | 20.70 | 19.20 | 0 | Bal. | 6.6 | 0 | 3.0 | ○ | Δ | × | × |
| Alloy Powder of Comparative Example 9 | 0.0600 | 20.70 | 19.20 | 0 | Bal. | 6.6 | 0 | 0.0 | Δ | Δ | Δ | Δ |
| Alloy Powder of Comparative Example 10 | 0.0400 | 20.70 | 19.20 | 0 | Bal. | 9.0 | 0 | 0.0 | Δ | Δ | ○ | Δ |
| Base Material (FSX414) | 0.2600 | 10.59 | 29.53 | 7.04 | Bal. | 0 | 0.62 | 0.0 | ⊚ | ⊚ | ○ | - |
| TIG Welding | - | - | - | - | - | - | - | - | - | ⊚ | ○ | - |

| (b) | | | | | | | | | | | | |
|---|---|---|---|---|---|---|---|---|---|---|---|---|
| Material | C | Si | Ni | Cr | Co | B | Al | | | | | |
| Molten Alloy Powder of This Invention | 0.0020 | 3.2 | Bal. | 17.0 | 20.0 | 2.5 | 0.0 | | | | | |
| Molten Alloy Powder for Comparative Example 8 | 0.0020 | 3.9 | Bal. | 17.0 | 20.0 | 2.6 | 3.0 | | | | | |

As is apparent from the results shown in Table 3(a) and Figs. 1 to 3, when the Cr content was less than 15% as in the comparative alloy powder 7, it was confirmed that the oxidation resistance was deteriorated. Further, when an alloy to which 3 wt% of AI was added was used as in the comparative alloy powder 8, the increased amount of oxidation was small and the oxidation resistance was excellent. However, an oxide was formed at the interface of the repaired portion, and as a result, creep strength was slightly deteriorated and the low cycle fatigue strength was largely deteriorated.

In addition it could be also confirmed that if Ni, Cr and C are excessively added, the resultant alloy structure is prone to become unstable. In particular, it could be also confirmed that if Cr content exceeded 45 wt% as in the comparative alloy powder 6, brittle phase such as σ phase is precipitated and deposited, so that the creep strength and low cycle fatigue strength were deteriorated.

### (Example 3)

As the same manner as in Example 1, C, B and Si as the melting point lowering element were added to the alloy powder shown in the Example 2 having a composition similar to that of the base material, so that various molten alloy powder sets having composition shown in Table 4 were prepared. Then, wettability (bonding property) as the brazing material was evaluated.

In also the present Example, the gap wettability test based on the wettability test method defined in JIS Z3191 was carried out as the same manner as in Example 1. In addition, a spreading test of the brazing material was additionally carried out, and wettability and flowability as the brazing material were evaluated.

The above spreading test of the brazing material is a test method in which 0.1g of the brazing material is held for 30 seconds at the brazing temperature and then it is quenched, and wettability is compared depending upon the size of the spreading area. Since there was supposed that the alloy powder of this Example 3 had inferior wettability and flowability, evaluation by the spreading test of brazing material was additionally performed. A result of the measurement evaluation is shown in Table 4.

**[Table 4]**

| Material | C | Si | Ni | Cr | Co | B | Ta | Si+1.5(C+B) | Gap Mutability Test Result | Spreading Test |
|---|---|---|---|---|---|---|---|---|---|---|
| Molten Alloy Powder 5 of This Invention | 0.003 | 3.9 | 20.7 | 19.2 | Bal. | 2.6 | 6.6 | 7.8 | ⊚ | ⊚ |
| Molten Alloy Powder 6 of This Invention | 0.050 | 3.0 | 21.5 | 20.5 | Bal. | 2.5 | 7.5 | 6.8 | ⊚ | ⊚ |
| Molten Alloy Powder 7 of This Invention | 0.001 | 4.0 | 19.5 | 18.5 | Bal. | 2.9 | 6.0 | 8.4 | ○ | ⊚ |
| Comparative Alloy Powder 11 | 0.003 | 2.0 | 20.7 | 19.2 | Bal. | 3.5 | 6.6 | 7.3 | Δ | ⊚ |
| Comparative Alloy Powder 12 | 0.003 | 5.2 | 20.7 | 19.2 | Bal. | 2.6 | 6.6 | 9.1 | × | ⊚ |
| Comparative Alloy Powder 13 | 0.035 | 3.9 | 20.7 | 19.2 | Bal. | 2.6 | 6.6 | 7.9 | Δ | ⊚ |

As is apparent from the results shown in Table 4, it could be confirmed that if C, B and Si were added at amounts within the predetermined range as the melting point lowering elements as the same manner as in the Example 1, the molten alloy could be used without arising any problems of the flowability and wettability which were formally concerned at the initial stage.

Next, the molten alloy powder comprising the Co-based alloy and non-molten alloy powder 4 comprising Co-based alloy having a composition similar to that of the base material were mixed thereby to prepare a brazing repair material, and the same repairing test as that of the Example 2 was carried out.

Compositions of the molten alloy powder 8 and the non-molten alloy powder 4 used in the present invention are shown in Table 5 (the molten alloy powder 5 of the present invention shown in Table 4 corresponds to the molten alloy powder 8 of the present invention shown in Table 5).

That is, the molten alloy powder 8 and the non-molten alloy powder 4 are mixed such that the weight ratio becomes 5:7, so that a brazing repair material was prepared. A base material composed of FSX414 material was formed with grooves each having width of 6mm, thereby to form a repairing portion for the test evaluation. Then, brazing repair materials (mixed powders) were charged and injected into the grooves. Thereafter, diffusion heat treatment was carried out under the same condition as that of the Example 2, and characteristics of the repaired portion were evaluated. A result of the evaluations is shown in Table 5 hereunder.

**[Table 5]**

| Material | C | Si | Ni | Cr | Co | B | Ta | Si+1.5(C+B) | Oxidation Resistance | Creep Strength | Low Cycle Fatigue Strength | Total Evaluation |
|---|---|---|---|---|---|---|---|---|---|---|---|---|
| Molten Alloy Powder 8 of This Invention | 0.003 | 3.9 | 20.7 | 19.2 | Bal. | 2.6 | 6.6 | 7.8 | ○ | ⊚ | ⊚ | ⊚ |
| Non- Molten Alloy Powder 4 of This Invention | 0.0026 | - | 20.7 | 19.2 | Bal. | - | 6.6 | - | | | | |

As is apparent from the results shown in Table 5, even in a case where a mixed powder of the brazing repair material comprising Co-based molten alloy powder and the non-molten alloy powder 4 is used, it could be also confirmed that the same or more excellent characteristics as those obtained when Ni-based molten alloy powder was used could be obtained.

### (Example 4)

Next, flow of process of the brazing repairing method using the brazing repair material according to the invention will be explained. In addition, the processing temperature, diffusion heat treatment operations to be performed in a plurality times, and operation for mixing the repair material in a flat portion without using paste will be explained.

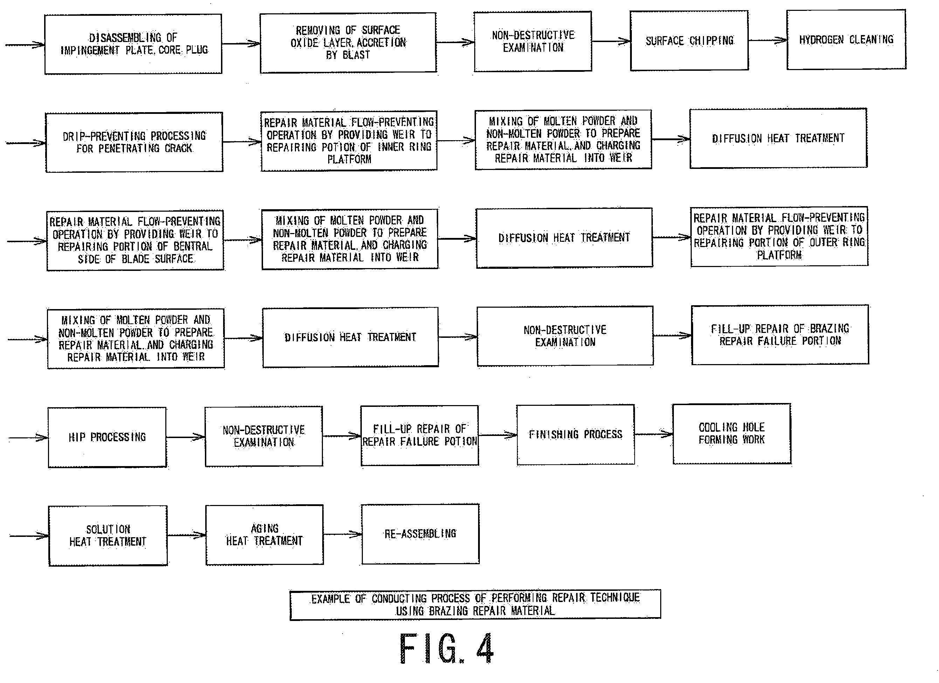

The processing procedure of the brazing repairing method of the invention includes the following steps as shown in also Fig. 4.

The processing procedure of the brazing repairing method of the invention includes the steps of:
(1) confirmation of reception; →
(2) impingement plate/core plug disassemble; →
(3) removal of surface oxide layer/accretion by blasting operation; →
(4) non-destructive examination such as ultrasonic flaw detection test and X ray flaw detection test; →
(5) surface chipping of a repairing portion; →
(6) hydrogen cleaning; →
(7) drip-preventing processing of the repair material to be used in sealing and welding operations of penetrating crack; →
(8) repair material flow preventing operation, mixing of molten powder and non-molten powder, and charging of the repair material into the repairing portion; →
(9) diffusion heat treatment in which the steps of (8) and (9) is repeated to the respective repairing portions (processing surfaces); →
(10) non-destructive examination and fill-up repair of repair failure portion; →
(11) HIP processing; →
(12) non-destructive examination and fill-up repair of repair failure portion; →
(13) finishing processing; →
(14) cooling hole forming; →
(15) solution heat treatment; →
(16) aging heat treatment; →
(17) core plug assembling; →
(18) inspection prior to shipment.

In the above brazing repairing step, in order to sufficiently exhibit the effect of the HIP processing which is carried out for compacting and densifying the repaired portion at a post processing, it is preferable to use, as the brazing repair material, a mechanically mixed powder in which only the molten alloy powder and the non-molten alloy powder are mixed without using paste material.

In this case, apparent viscosity of the brazing repair material is small and it flows easily. Therefore, in order to prevent the brazing repair material from moving, it is preferable to set an inclination angle of the processing surface of the repairing portion with respect to a horizontal plane becomes 30° or less, and the charging processing of the brazing repair material and the diffusion heat treatment are carried out.

As the procedure for preventing the repair material from flowing, mixed powder in which paste agent is mixed into the brazing repair material (mixed powder) to enhance the viscosity can be used, or there can be adopted a procedure in which the periphery of the repairing portion is surrounded by a heatproof tape.

As described above, in order to prevent the brazing repair material from flowing or moving, it is effective to keep the processing surface horizontally or almost horizontally. When many damaged portions are generated in one high temperature part, it is necessary to repeat the procedure in step (8) (repair material flow preventing operation, mixing of the molten powder and the non-molten powder, and charging of the repair material into the repairing portion) and the procedure in step (9) (diffusion heat treatment) by many times corresponding to the number of processing surfaces. When damage generated in the first nozzle is to be repaired as the high temperature part of the actual gas turbine, the brazing repairing processing is carried out in accordance with the processing procedures shown in Fig. 4.

That is, the setting procedure of the diffusion heat treatment temperature in the brazing repairing processing will be explained. That is, melting points of various molten alloy powder sets and non-molten alloy powder sets having the composition shown in Table 6 were measured by a differential thermal analysis method.

That is, a sample (alloy powder) and a reference sample were symmetrically disposed in a furnace, the temperature was increased at a constant velocity (heating rate). Then, a temperature difference between the sample and the reference sample was measured, and a differential thermal analysis meter which was a device for plotting with respect to time recording was prepared. Melting points of the molten alloy and non-molten alloy were measured using a differential thermal analysis curve (DTA curve) measured by the differential thermal analysis meter. The respective melting points are shown in Table 6 together with the melting point of the FSX414 material which is the base material.

Concerning the FSX414 material which is the base material, a temperature, at which local melting was generated, obtained by a structure observation after the sample was heated to a predetermined temperature and quenched was obtained together with the melting point obtained from the DTA curve. The local melting temperature was 1261°C.

From the above data, 1200°C was adopted as the diffusion heat treatment temperature which was higher than the melting point of the molten alloy powder and which is lower than the local melting temperature of the base material.

**[Table 6]**

| Material | C | Si | Ni | Cr | W | Co | B | Ta | Fe | Melting Point (°C) |
|---|---|---|---|---|---|---|---|---|---|---|
| Molten Alloy 1 of This Invention | 0.002 | 3.90 | Bal. | 13.0 | 0 | 20 | 2.6 | 0 | 0 | 1130 |
| Molten Alloy 2 of This Invention | 0.001 | 3.00 | Bal. | 12.0 | 0 | 18 | 2.4 | 0 | 0 | 1183 |
| Molten Alloy 3 of This Invention | 0.003 | 3.00 | Bal. | 12.0 | 0 | 21 | 2.9 | 0 | 0 | 1151 |
| Molten Alloy 4 * | 0.002 | 4.70 | Bal. | 12.0 | 0 | 20 | 2.4 | 0 | 0 | 1112 |
| Non-Molten Alloy 1 of This Invention | 0.003 | 0.00 | 20.7 | 19.2 | 0 | Bal. | 0 | 6.6 | 0 | 1331 |
| Non-Molten Alloy 2 of This Invention | 0.040 | 0.00 | 24.5 | 44.0 | 0 | Bal. | 0 | 7.5 | 0 | 1245 |
| Non-Molten Alloy 3 of This Invention | 0.001 | 0.00 | 10.0 | 15.0 | 0 | Bal. | 0 | 6 | 0 | 1353 |
| Base Material (FSX414) | 0.260 | 0.78 | 10.6 | 29.5 | 7 | Bal. | 0.012 | 0 | 0.62 | 1366 |

| | | | | | | | | | | |
|---|---|---|---|---|---|---|---|---|---|---|
| * Provided for comparative purposes only | | | | | | | | | | |

### (Example 5)

Next, a mixing ratio and a grain size ratio between the molten alloy powder and the non-molten alloy powder are important factors in the high temperature brazing repairing technique, so that an influence of the mixing ratio and the grain size ratio (particle diameter ratio) exerting on characteristics of a repaired portion will be explained based on the following Examples.

At first, concerning the mixing ratio between the molten alloy powder and the non-molten alloy powder, if the ratio of the molten alloy powder is increased, shape retainability of the repair material is deteriorated. On the other hand, if the ratio of the non-molten alloy powder is increased, the flowability of the repair material is deteriorated.

As a result, there is a tendency that the repair material does not easily flow to the tip end of a crack, whereby the charging property of the repair material is deteriorated, so that porosity (air hole ratio, brazing failure) of a repaired portion is increased.

The mixing ratio between the molten alloy powder and the non-molten alloy powder was concretely varied as shown in Table 7, whereby various brazing repair materials were prepared, and the maintainability of a shape (shape- retainability) of the repair material was confirmed in a state where the inclination angle of the repairing portion (processing surface) was changed.

In addition, the diffusion heat treatment was carried out in a state where the processing surface was set to be horizontal (inclination angle was 0°), the cross sectional structure of the repaired portion was observed, and generation status of failure such as air holes (pores) was checked. A result of the check is shown in Table 7.

**[Table 7]**

| Mixing Ratio | Inclination Angle (° ) and Shape-Retainability of Repair Material | | | | | | | Structure State at Inclination Angle of zero |
|---|---|---|---|---|---|---|---|---|
| Non- Molten Alloy Powder/ Molten Alloy Powder | 10 | 15 | 30 | 45 | 60 | 75 | 90 | |
| 90/ 10 | ○ | ○ | ○ | ○ | ○ | Δ | Δ | Large Porosity |
| 80/ 20 | ○ | ○ | ○ | ○ | Δ | Δ | Δ | Large Porosity |
| 70/ 30 | ○ | ○ | ○ | Δ | Δ | Δ | Δ | Medium Porosity |
| 60/ 40 | ○ | ○ | ○ | Δ | Δ | Δ | Δ | Small Porosity |
| 50/ 50 | ○ | ○ | ○ | × | × | × | × | Small Porosity |
| 40/ 60 | ○ | ○ | ○ Δ | × | × | × | × | Small Porosity |
| 30/ 70 | ○ | × | × | × | × | × | × | Small Porosity |

| | | | | | | | | |
|---|---|---|---|---|---|---|---|---|
| ○ :Shape- retainability of repair material was good. Δ :In case of using a paste, shape- retainability of repair material was secured. × :Even if a paste material was used. shape- retainability of repair material could not be obtained. | | | | | | | | |

As is apparent from the results shown in Table 7, when the mixing ratio between the non-molten alloy powder and the molten alloy powder is 40/60 also, the shape-maintainability of the repair material can be obtained to some extent. However, it is preferable to limit the mixing ratio so as to exceed 40/60, and it can be confirmed that the air hole ratio (porosity) is the smallest and optimal when the range of the mixing ratio is 50/50 to 60/40.

On the other hand, also a ratio of a particle diameter (grain size ratio) of the non-molten alloy powder and a particle diameter (grain size) of the molten alloy powder constituting the brazing repair material largely influences on the soundness of the repaired portion.

The particle diameter of the non-molten alloy powder was set to about 45 microns, and the particle diameter of the molten alloy powder was varied from 1/2 to 3 times of the particle diameter of the non-molten alloy powder, whereby four kinds of brazing repair materials were prepared. Using these brazing repair materials, the brazing repairing operation was carried out under the same condition as that of the Example 2.

The repairing operation was carried out while keeping the repaired portion horizontally (inclination angle was 0°). Study of the optimal particle diameter (grain size) ratio was carried out by observing the structure of the repaired portions and comparing the magnitudes of the air hole ratio (porosity). A result of the study is shown in Table 8.

**[Table 8]**

| Grain Size Ratio (Particle Diameter Ratio) | Structure at Inclination Angle of Zero |
|---|---|
| Non- Molten Alloy Powder/ Molten Alloy Powder | |
| 3 | Small Porosity |
| 2 | Small Porosity |
| 1 | Small Porosity |
| 0.5 | Large Porosity |

As is apparent from the results shown in Table 8, when the ratio of the particle diameter of the non-molten alloy powder and the particle diameter of the molten alloy powder was 1 to 3, a compact and densified structure having small air hole ratio (porosity) was obtained, and when the particle diameter ratio was 2, the optimal compact structure was obtained.

### (Example 6)

Next, an influence exerting on a structure of a repaired portion when high temperature brazing repairing operation was carried out using a brazing repair material in which a predetermined amount of binder was added was studied as an Example 6.

In a high temperature part having a light damage, when a portion having a large inclination angle with respect to the horizontal surface of the processing surface is to be repaired, even if a block of flow of brazing repair material is formed, it becomes difficult to hold a sufficient amount of repair material on the repairing portion in some cases.

In such a case, it is necessary to use a repair material in which a binder of such a range that quality of repaired portion can be maintained is mixed.

In this Example, a mixing ratio (weight ratio) of a binder with respect to the brazing repair material (mixed powder) was varied within a range of 2 to 20% as shown in Table 9 thereby to prepare repair materials having different viscosities (flowability).

Using these brazing repair materials, the brazing repairing operation was carried out under the same condition as that of the Example 2. The influence of the mixing ratio of binder exerting on the structure after diffusion heat treatment was checked by observing the textures of the repaired portions and comparing the magnitudes of the air hole ratio (porosity). A result of study is shown in Table 9.

**[Table 9]**

| Mass Ratio of Binder (%) | Cross Sectional Structure |
|---|---|
| Binder/ (Non- Molten Alloy Powder +Molten Alloy Powder) | |
| 20 | Large Porosity |
| 15 | Medium Porosity |
| 12 | Small Porosity |
| 10 | Small Porosity |
| 5 | Small Porosity |
| 2 | Could not Mixing |

As is apparent from the results shown in Table 9, it could be confirmed that when the mixing ratio of binder with respect to the brazing repair material was set to about 5 to 12%, the air hole ratio (porosity) was small and brazing failure was light and small.

### (Example 7)

Next, condition of a hot isostatic press (HIP) processing was studied. In the Example 7, the molten alloy powder 1 of the present invention and the non-molten alloy powder 1 of the invention were mixed at a weight ratio of 5:7 to prepare a brazing repair material. Then, a brazing repairing operation was carried out under the same condition as that of the Example 2 using this brazing repair material.

Test pieces including the above repaired portion were subjected to the HIP processing under the conditions shown in Table 10. Concretely, the pressure was set to 1000 atm, the heating temperature was varied within a range of 1000°C to 1350°C and the HIP processing was carried out. A structure of a repaired portion of each of the test pieces was observed, and charging state of the repair material charged into cracks was checked. Further, tensile test of the repaired portion was carried out, and tensile strength and tensile elongation of the repaired portion were measured. A result of the measurement is shown in Table 10.

**[Table 10]**

| | HIP Treatment Condition | | Structure Observation Result | | | Tensile Test Result of Repaired Portion | |
|---|---|---|---|---|---|---|---|
| | Temperature (°C) | Pressure (atm) | Structure of Base Material | Structure of Repaired Portion | Charging State of Repair Material into Crack | Tensile Strength (MPa) | Tensile Elongation (%) |
| HIP Condition 1 of This Invention | 1000 | 1000 | ⊚ | Δ :No Change in Structure | ○ | 597 | 8 |
| | | | | ○ Porosity was Reduced | | | |
| HIP Condition 2 of This Invention | 1100 | 1000 | ⊚ | ○ Structural Fusion of Non-molten and Molten Alloy was Observed | ⊚ | 669 | 10.8 |
| | | | | ○ :Porosity was Reduced | | | |
| HIP Condition 3 of This Invention | 1200 | 1000 | ⊚ | ○ Structural Fusion of Non-molten and Molten Alloy was Observed. | ⊚ | 724 | 15.9 |
| | | | | ○ Porosity was Reduced. | | | |
| HIP Condition 4 of This Invention | 1260 | 1000 | ○ Sign of Partial Collapse of Cell Structure was Observed. | ○ Structural Fusion of Non-molten and Molten Alloy was Observed. | ⊚ | 700 | 17.0 |
| | | | | ○ : Porosity was Reduced. | | | |
| Comparative Example 1 | 1265 | 1000 | Δ Partial Collapse of Cell Structure was Observed. | ○ structural Fusion of Non-molten and Molten Alloy was Observed. | ⊚ | 654 | 14.6 |
| | | | | ○ Porosity was Reduced. | | | |
| Comparative Example 2 | 1300 | 1000 | Δ :Partial Collapse of Cell Structure was Observed. | ○ :Sign of Partial Melting and Flow of Material was Observed. | Δ | 597 | 23 |
| Comparative Example 3 | 1350 | 1000 | × Collapse of Cell Structure was Observed. | × :part of Material was Molten and Flown. | Δ | 485 | 1.1 |

As is apparent from the results shown in Table 10, it could be confirmed that when the HIP processing was carried out at a temperature higher than 1260°C, the structure of the base material was collapsed. Further, when the HIP processing was carried out at a temperature higher than 1300°C, a part of the repaired portion was melted and flowed out.

On the other hand, when the processing was carried out at a temperature of 1000°C, almost no change was found from textures of the molten alloy powder and the non-molten alloy powder after completion of the diffusion heat treatment, and textures were homogenized from the temperature of 1100°C.

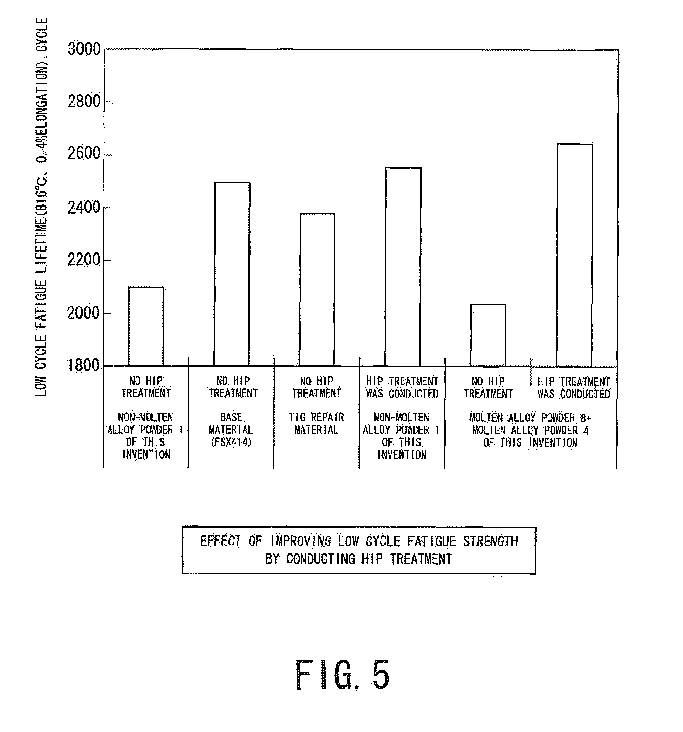

The test pieces which were subjected to the HIP treatment under the HIP processing condition 3 (pressure: 1000 atm, temperature: 1200°C) of the present invention after brazing repairing operation using the brazing repair materials used in the Examples 2 and 3 and the molten alloy powder 8 and the non-molten alloy powder 4 of the invention used in the Example 3 were mixed at the ratio of 5:7 to prepare brazing repair material, using this brazing repair material, the brazing repairing operation was carried out and then, this was subjected to the HIP processing under the HIP processing condition 3, and low cycle fatigue lifetime of this test piece was measured. As the same manner as in the Example 2, the low cycle fatigue lifetime is shown with the repeatable times of operation until the total strain of 0.4% is generated at the temperature 816°C. The result of the measurement is shown in Fig. 5 in addition to the result of the Example 2.

As is apparent from the results shown in Fig. 5, when the HIP treatment (processing) was carried out under the predetermined condition after the brazing repairing operation, the compacting phenomenon (densification) of the repaired portion proceeds irrespective of the type of the alloy. Therefore, low cycle fatigue lifetime which is equal to or more excellent than that of the base material could be secured.

### (Example 8)

Next, in the brazing repairing method of the present invention, influence of the particle diameter ratio of the molten alloy powder and the non-molten alloy powder exerted on the characteristics of repairing portion will be explained based on the following Example 8. A brazing repair material used in the Example 8 includes molten alloy powder and non-molten alloy powder having composition shown in Table 11, a particle diameter (grain size) of the molten alloy powder is set to about half of the particle diameter of the non-molten alloy powder, thereby to improve the flowability of the molten alloy at the time of diffusion heat treatment.

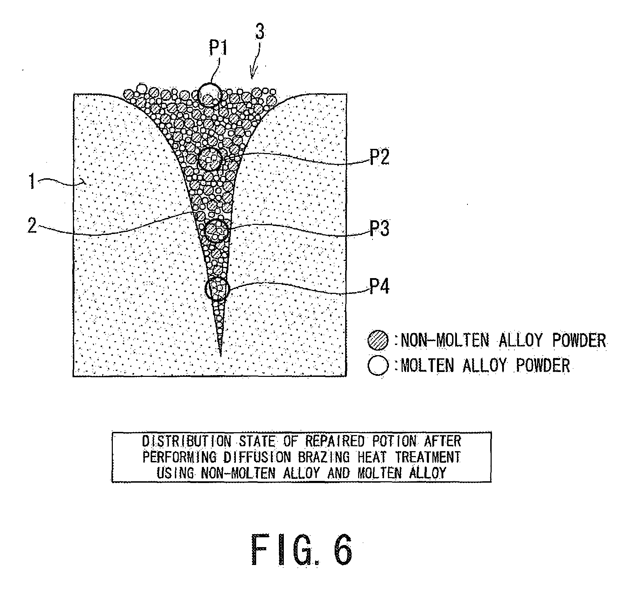

Using the brazing repair material prepared in the above manner, the diffusion brazing repairing operation was carried out under the same condition as that of the Example 2. The structure of the repaired portion was observed and as a result, the structure as shown in Fig. 6 was obtained. That is, Fig. 6 is a schematic sectional view showing a distribution state of a non-molten alloy and a molten alloy in the repaired portion repaired by the diffusion brazing method. It was confirmed that if a brazing repair material 3 comprising a molten alloy powder (○ ) and a non-molten alloy powder (• ) was charged into a crack 2 generated in the base material 1 and the diffusion heat treatment was carried out, since the flowability of the molten alloy at the time of the diffusion heat treatment was improved, the repair material effectively penetrated from the surface portion P1 of the base material to the tip end P4 of the crack 2 through intermediate portions P2 and P3, and the charging property of the repair material into the crack 2 was extremely excellent.

An analysis result of the alloy composition at the surface P1 of the base material, the intermediate portions P2 and P3 of the crack 2 and the tip end P4 of the crack 2 in the repaired portion shown in Fig. 6 is shown in Table 11.

**[Table 11]**

| Material | | C | Si | Ni | Cr | Co | B | Ta |
|---|---|---|---|---|---|---|---|---|
| Non- Molten Alloy Powder | | 0.0026 | 0.0 | 20.7 | 19.2 | 53.5 | 0.0 | 6.6 |
| Molten Alloy Powder | | 0.0020 | 3.9 | 60.5 | 13.0 | 20.0 | 2.6 | 0.0 |
| Analysis Results | Port ion: P1 (Surface Portion) | 0.0024 | 1.2 | 32.6 | 17.3 | 43.4 | 0.7 | 4.6 |
| | Portion: P2 (Intermediate Portion) | 0.0024 | 1.6 | 37.3 | 16.6 | 39.5 | 0.9 | 3.9 |
| | Portion: P3 (Intermediate Portion) | 0.0023 | 2.0 | 40.6 | 16.1 | 36.7 | 1.1 | 3.3 |
| | Port ion: P4 (Crack Tip End Portion) | 0.0022 | 2.7 | 48.6 | 14.9 | 30.0 | 1.8 | 2.0 |

As apparent from the results shown Table 11 and Fig. 6, it could be confirmed that since the flowability of the molten alloy at the time of the diffusion heat treatment was improved, the repair material effectively penetrated from the surface portion P1 of the base material to the tip end portion P4 of the crack 2 through the intermediate portions P2 and P3, and the charging property of the repair material into the crack 2 was extremely excellent.

As a result, as is apparent from the analysis results shown in Table 11, it was confirmed that the alloy composition became closer to the molten alloy powder composition from the non-molten alloy powder composition toward the tip end P4 of the crack 2 from the surface layer P1 of the repaired portion. Although Si and B component amounts were slightly lower than the original molten alloy composition by the diffusion heat treatment, there was a tendency that the Si and B component amounts became closer to the molten alloy powder composition toward the tip end of the crack.

### (Example 9)

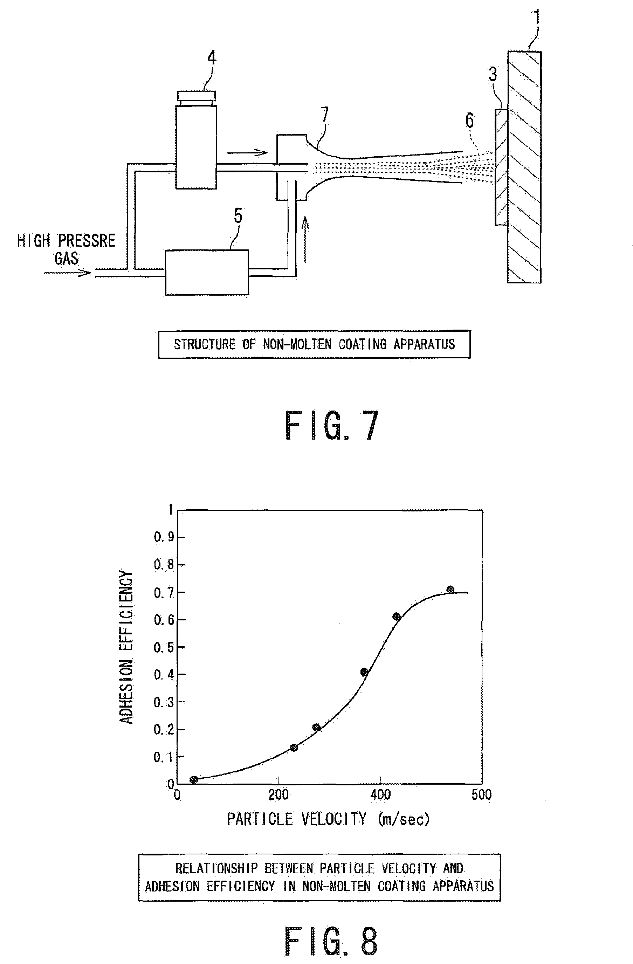

Next, an example constituted such that brazing repair material comprising molten alloy powder and non-molten alloy powder is charged into a to-be repaired portion by high velocity gas flow in the brazing repairing method of the present invention will be explained based on the following Example 9. In the Example 9, the non-molten coating apparatus as shown in Fig. 7 is used as a charging apparatus of brazing repair material into a to-be repaired portion.

The non-molten coating apparatus has a structure similar and close to a thermal spray apparatus used for coating processing of a gas turbine movable blade (rotor vane). The non-molten coating apparatus includes a powder supply device 4 which supplies brazing repair material 3, a gas heating device 5 which heats compressed gas (high pressure gas) such as nitrogen and He gas or the like, and a supersonic nozzle 7 which injects the brazing repair material 3 supplied from the powder supply device 4 as high velocity gas jet 6 dispersed by heated high pressure gas.

When brazing repair material 3 is charged into a repairing portion of a base material 1 having a failure or defective such as a crack, repair material is dispersed and conveyed by high velocity gas flow of a temperature at which alloy powder constituting the brazing repair material 3 is not melted or oxidized.

Then, the repair material is made to collide against the repairing portion, the mixed powder is adhered to the repairing portion by the collision energy, and the repair material is pushed into a deep portion of the crack.

That is, the flow velocity of compressed air or compressed gas such as nitrogen and He gas or the like is accelerated through the gas heating device 5 and the gas is supplied to the supersonic nozzle 7, the gas is mixed with powder of the brazing repair material 3 which is separately supplied, the flow path in the supersonic nozzle 7 is further narrowed, thereby further accelerating the gas flow velocity, and the gas is allowed to collide against the repairing portion and it is coated with the material.

According to these charging operations, repair material can be efficiently adhered without using a binder which easily generate a failure and without providing any complicated flow-preventing measure. Especially since it is possible to strongly adhere the brazing repair material to the base material surface and inside a crack by the above charging operation, even if damage such as a crack is generated over the entire surface of a gas turbine stationary blade (stator vane), the number of diffusion heat treatment times can be limited to only two, i.e., one time when a ventral side of the blade surface is oriented upward and the other time when a ventral side of the blade surface is oriented downward, and the efficiency of the repairing operation can be largely enhanced.

Fig. 8 is a graph showing a relationship between the particle velocity and adhesion efficiency of the particle when brazing repair material is made to collide against and adhere to the base material surface using the non-molten coating apparatus. As shown from the result shown in Fig. 8, since the adhesion efficiency is enhanced in a range where the particle velocity of the brazing repair material is 300m/sec or higher, it is extremely effective to spray carrier gas having the particle velocity of 300m/sec or higher, and to charge the repair material particle to the base material surface or inside the crack.

Here, the adhesion efficiency is defined as a ratio of amount of repair material actually adhered to a base material surface and inside a crack with respect to an amount of the repair material conveyed by high velocity gas flow.

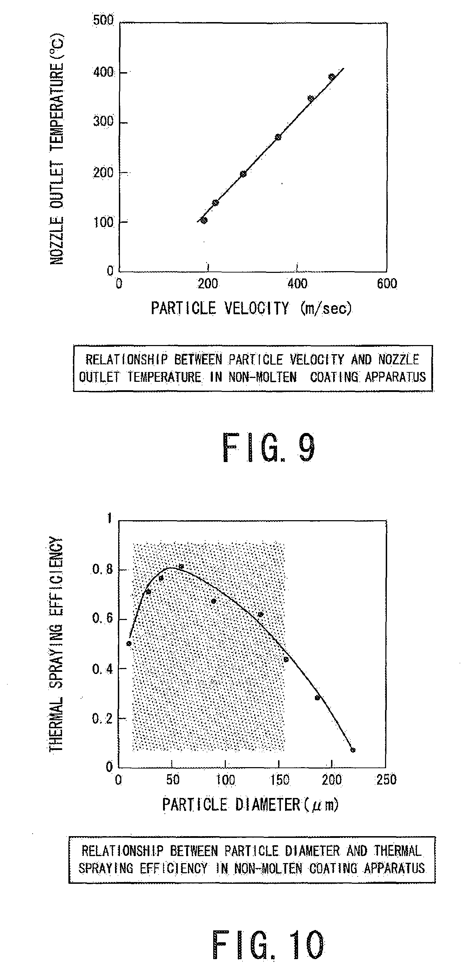

Fig. 9 is a graph showing a relation between temperature of compressed gas at a nozzle outlet of the non-molten coating apparatus and particle velocity. There is apparent tendency that the particle velocity is increased proportional to increase of compressed gas temperature at the nozzle outlet. In order to set the particle velocity to 300m/sec or higher, it is sufficient to set the temperature of compressed gas as carrier gas at the nozzle outlet to 200°C or higher.

However, if the temperature of the compressed gas exceeds 800°C, the alloy powder constituting the repair material is melted or oxidized easily and thus, it is preferable that the upper limit temperature is set to 800°C.

Fig. 10 is a graph showing a relation between the thermal spray efficiency of brazing repair material powder and powder particle diameter (powder grain size) when the brazing repair material powder is made to collide against and adhere to the base material surface at high velocity using the non-molten coating apparatus. Since it is obvious that when the powder particle diameter is in a range of 10µm to 150µm, a thermal spray efficiency is effectively increased, so that it is preferable that particle diameters of the molten alloy powder and the non-molten alloy powder constituting the brazing repair material is selected from the above range.

Here, the thermal spray efficiency is defined as a ratio of amount of the repair material actually thermally sprayed to a base material surface and inside a crack with respect to an amount of repair material conveyed by high velocity gas flow.

According to the brazing repair material of the Examples and the brazing repairing method using the brazing repair material, since a repair material comprising non-molten alloy powder having a composition similar to that of the base material of part and molten alloy powder of predetermined composition is used, it is easy to repair and regenerate a high temperature part in which a failure such as a crack and corrosion is generated, and it is possible to largely enhance the operation economy and maintainability of a gas turbine which uses high temperature part as constituent material.

## Claims

1. An Al-free brazing repair material which is used in a repairing operation in which the brazing repair material is charged into a repairing portion of a base material having a defect including a crack and corrosion, and a diffusion heat treatment is carried out whereby the brazing repair material is integrally bonded to the repairing portion so as to repair the defective repairing portion, wherein
said brazing repair material is composed of a mixture comprising:
non-molten alloy powder having a composition similar to that of the base material; and
molten alloy powder which is melted at a temperature of the diffusion heat treatment,
wherein the molten alloy powder is a brazing repairing alloy and consists of 0.001 to 0.05 mass% of C, 2.5 to 4.5 mass % of Si, 12 to 20 mass % of Cr, 17 to 23 mass % of Co, 2 to 4 mass % of B, the balance being Ni and inavoidable impurities, and a constitution ratio [Si+1.5×(C+B)] of the components is 6 or more and 9 or less, and
wherein the non-molten alloy powder consists of 10 to 25 mass % of Ni, 15 to 45 mass % of Cr, 6 to 8 mass % of Ta, 0.1 mass % or less of W, 0.05 mass % or less of C, the balance being Co and inavoidable impurities.

2. The brazing repair material according to claim 1, wherein the non-molten alloy powder contains 0.001 to 0.01 mass % of C and 18 to 25 mass % of Cr.

3. A brazing repairing method comprising:
a step of carrying out inspection of a base material of a gas turbine part in which a defect including a crack and corrosion is generated after operating the gas turbine, followed by disassembling and cleaning a surface portion of the base material, followed by performing solution heat treatment to the base material, followed by chipping the surface portion and a bottom of a penetrating crack, followed by removing an oxide layer from the surface portion of the base material, and followed by conducting a preliminary process of TIG drip-preventing processing for the penetrating crack;
a step of forming a flow-preventing surrounding for a brazing repair material around a repairing portion;
a step of charging the brazing repair material according to claim 1 or 2 into the flow-preventing surrounding, the brazing repair material comprising a mixture of non-molten alloy powder having a composition similar to that of the base material and molten alloy powder which is melted at a temperature of diffusion heat treatment;
a brazing repairing step of repeating, a plurality of times, the diffusion heat treatment at a temperature equal to or lower than a melting point of the base material of the gas turbine part and equal to or higher than a melting point of the molten alloy powder, thereby integrally bonding the brazing repair material to the repairing portion, and for compacting and densifying the brazing repair material by conducting a heat treatment under pressurized atmosphere;
a step of carrying out finishing processing including inspection of a brazing repaired portion, additional repairing operation of partial defective portion and repairing processing of a cooling hole;
a step of carrying out solution treatment and aging heat treatment for the repaired portion subjected to the finishing processing; and
a step of re-assembling the repaired gas turbine parts.

4. The brazing repairing method according to claim 3, wherein a weight ratio of the non-molten alloy powder of the brazing repair material is set to 0.8 times or more of the molten alloy powder, and a particle diameter of the non-molten alloy powder is set to 2 times or more of the molten alloy powder, thereby enhancing a charging degree of the brazing repair material to the repairing portion, and enhancing flowability of the molten alloy powder in the non-molten powder and tip end portion of the crack.

5. The brazing repairing method according to claim 4, wherein the weight ratio of the non-molten alloy powder of the brazing repair material with respect to the brazing repair material is set to 1 to 1.5 times of the molten alloy powder.

6. The brazing repairing method according to claim 3, wherein the brazing repairing step is carried out by utilizing a hot isostatic pressing (HIP) method in which a heating temperature is set to 1000°C or higher and 1300°C or lower, a pressurizing force is set to 1000 atm pressure or higher and 2000 atm pressure or lower, and the solution treatment and aging treatment are carried out after the brazing repairing step.

7. The brazing repairing method according to claim 6, wherein the heating temperature in the hot isostatic pressing (HIP) method is set to 1100°C or higher and 1260°C or lower.

8. The brazing repairing method according to claim 3, wherein a crack is formed in the repairing portion, and composition of the brazing repair material charged into the crack becomes closer to a composition of the molten alloy powder toward a tip end of the crack from a surface side thereof.

9. The brazing repairing method according to claim 3, wherein as a charging method of the brazing repair material to the repairing portion, the brazing repair material is carried using high velocity carrier gas flow at 800°C or lower at which the alloy powder is not melted or oxidized, particle velocity of the brazing repair material is set to 300m/sec or higher, and the brazing repair material is adhered to the repairing portion or charged into the crack.

## Patentansprüche

1. Al-freies Lötreparaturmaterial, das bei einem Reparaturvorgang verwendet wird, bei dem das Lötreparaturmaterial in einen Reparaturabschnitt eines Basismaterials eingebracht wird, das einen Defekt, einschließlich einen Riss und Korrosion, aufweist, und eine Diffusionswärmebehandlung durchgeführt wird, wodurch das Lötreparaturmaterial ganzheitlich an den Reparaturabschnitt gebunden wird, so dass der defekte Reparaturabschnitt repariert wird, wobei
das Lötreparaturmaterial aus einem Gemisch zusammengesetzt ist, das umfasst:
ein nicht-geschmolzenes Legierungspulver, das eine Zusammensetzung aufweist, die derjenigen des Basismaterials ähnlich ist, und
ein geschmolzenes Legierungspulver, das bei der Temperatur der Diffusionswärmebehandlung geschmolzen wird,
wobei das geschmolzene Legierungspulver eine Lötreparaturlegierung ist und aus 0,001 bis 0,05 Massen-% C, 2,5 bis 4,5 Massen-% Si, 12 bis 20 Massen-% Cr, 17 bis 23 Massen-% Co, 2 bis 4 Massen-% B besteht, wobei es sich bei dem Rest um Ni und unvermeidbare Verunreinigungen handelt, und das Zusammensetzungsverhältnis [Si + 1,5 × (C + B)] der Komponenten 6 oder mehr und 9 oder weniger beträgt, und
wobei das nicht-geschmolzene Legierungspulver aus 10 bis 25 Massen-% Ni, 15 bis 45 Massen-% Cr, 6 bis 8 Massen-% Ta, 0,1 Massen-% oder weniger W, 0,05 Massen-% oder weniger C besteht, wobei es sich bei dem Rest um Co und unvermeidbare Verunreinigungen handelt.

2. Lötreparaturmaterial nach Anspruch 1, bei dem das nicht-geschmolzene Legierungspulver 0,001 bis 0,01 Massen-% C und 18 bis 25 Massen-% Cr enthält.

3. Lötreparaturverfahren, umfassend:
einen Schritt des Durchführens einer Überprüfung eines Basismaterials eines Gasturbinenbauteils; in dem ein Defekt, einschließlich ein Riss und Korrosion, beim Betreiben der Gasturbine erzeugt worden ist, gefolgt von dem Zerlegen und Reinigen eines Oberflächenabschnitts des Basismaterials, gefolgt von der Durchführung einer Lösungswärmebehandlung mit dem Basismaterial, gefolgt vom Zerspanen des Oberflächenabschnitts und eines unteren Teils eines durchdringenden Risses, gefolgt von dem Entfernen einer Oxidschicht von dem Oberflächenabschnitt des Basismaterials, und gefolgt von dem Durchführen eines Vorbereitungsprozesses einer WIG-Tropfverhinderungsverarbeitung für den durchdringenden Riss,
einen Schritt des Bildens einer ein Fließen verhindernden Umgebung für ein Lötreparaturmaterial um einen Reparaturabschnitt herum,
einen Schritt des Einbringens des Lötreparaturmaterials nach Anspruch 1 oder 2 in die ein Fließen verhindernde Umgebung, wobei das Lötreparaturmaterial ein Gemisch aus einem nicht-geschmolzenen Legierungspulver mit einer Zusammensetzung, die derjenigen des Basismaterials ähnlich ist, und einem geschmolzenen Legierungspulver, das bei der Temperatur der Diffusionswärmebehandlung geschmolzen wird, umfasst,
einen Lötreparaturschritt des mehrmaligen Wiederholens der Diffusionswärmebehandlung bei einer Temperatur, die gleich dem Schmelzpunkt des Basismaterials des Gasturbinenbauteils oder niedriger als dieser ist, und die gleich dem Schmelzpunkt des geschmolzenen Legierungspulvers oder höher als dieser ist, wodurch das Lötreparaturmaterial ganzheitlich an den Reparaturabschnitt gebunden wird, und zum Verfestigen und Verdichten des Lötreparaturmaterials durch Durchführen einer Wärmebehandlung in einer mit Druck beaufschlagten Atmosphäre,
einen Schritt des Durchführens einer Fertigbearbeitung, einschließlich einer Überprüfung eines lötreparierten Abschnitts, eines zusätzlichen Reparaturvorgangs für einen teilweise defekten Abschnitt und einer Reparaturverarbeitung eines Kühllochs,
einen Schritt des Durchführens einer Lösungsbehandlung und einer Alterungswärmebehandlung für den reparierten Abschnitt, welcher der Fertigbearbeitung unterzogen worden ist, und
einen Schritt des Zusammenbauens der reparierten Gasturbinenbauteile.

4. Lötreparaturverfahren nach Anspruch 3, bei dem der Gewichtsanteil des nicht-geschmolzenen Legierungspulvers des Lötreparaturmaterials auf das 0,8-fache oder mehr des geschmolzenen Legierungspulvers eingestellt wird und der Teilchendurchmesser des nicht-geschmolzenen Legierungspulvers auf das 2-fache oder mehr des geschmolzenen Legierungspulvers eingestellt wird, wodurch der Einbringungsgrad des Lötreparaturmaterials in den Reparaturabschnitt verbessert wird und die Fließfähigkeit des geschmolzenen Legierungspulvers in dem nicht-geschmolzenen Pulver und dem Spitzenendabschnitt des Risses verbessert wird.

5. Lötreparaturverfahren nach Anspruch 4, bei dem der Gewichtsanteil des nicht-geschmolzenen Legierungspulvers des Lötreparaturmaterials bezogen auf das Lötreparaturmaterial auf das 1- bis 1,5-fache des geschmolzenen Legierungspulvers eingestellt wird.

6. Lötreparaturverfahren nach Anspruch 3, bei dem der Lötreparaturschritt durch Verwenden eines heißisostatischen Pressverfahrens (HIP-Verfahrens) durchgeführt wird, bei dem die Erwärmungstemperatur auf 1000 °C oder höher und 1300 °C oder niedriger eingestellt wird, die Druckkraft auf einen Druck von 1000 atm oder höher und einen Druck von 2000 atm oder niedriger eingestellt wird und die Lösungsbehandlung und die Alterungsbehandlung nach dem Lötreparaturschritt durchgeführt werden.

7. Lötreparaturverfahren nach Anspruch 6, bei dem die Erwärmungstemperatur in dem heißisostatischen Pressverfahren (HIP-Verfahren) auf 1100 °C oder höher und 1260 °C oder niedriger eingestellt wird.

8. Lötreparaturverfahren nach Anspruch 3, bei dem ein Riss in dem Reparaturabschnitt ausgebildet ist und die Zusammensetzung des Lötreparaturmaterials, das in den Riss eingebracht wird, in der Richtung eines Spitzenendes des Risses ausgehend von einer Oberflächenseite davon der Zusammensetzung des geschmolzenen Legierungspulvers ähnlicher wird.

9. Lötreparaturverfahren nach Anspruch 3, bei dem als Einbringverfahren des Lötreparaturmaterials in den Reparaturabschnitt das Lötreparaturmaterial mit einem Hochgeschwindigkeitsträgergasstrom bei 800 °C oder niedriger mitgeführt wird, wobei das Legierungspulver nicht geschmolzen oder oxidiert wird, die Teilchengeschwindigkeit des Lötreparaturmaterials auf 300 m/s oder höher eingestellt wird und das Lötreparaturmaterial an dem Reparaturabschnitt anhaften-gelassen wird oder in den Riss eingebracht wird.

## Revendications

1. Matériau de réparation de brasage exempt d'aluminium qui est utilisé dans une opération de réparation dans laquelle le matériau de réparation de brasage est chargé dans une partie de réparation d'un matériau de base ayant un défaut incluant une fissure et de la corrosion, et un traitement thermique de diffusion est réalisé de sorte que le matériau de réparation de brasage est intégralement lié à la portion de réparation de manière à réparer la partie de réparation défectueuse, dans lequel
ledit matériau de réparation de brasage est composé d'un mélange comprenant:
de la poudre d'alliage non-fondu ayant une composition similaire à celle du matériau de base; et
de la poudre d'alliage fondu qui est fondu à une température du traitement thermique de diffusion,
dans lequel la poudre d'alliage fondu est un alliage de réparation de brasage et consiste de 0,001 à 0,05 % en masse de C, 2,5 à 4,5% en masse de Si, 12 à 20 % en masse de Cr, 17 à 23 % en masse de Co, 2 à 4 % en masse de B , l'équilibrage étant Ni et les impuretés inévitables, et un rapport de constitution [Si+1,5x(C+B)] des composants est 6 ou plus et 9 ou moins, et
dans lequel la poudre d'alliage non-fondu consiste en 10 à 25% en masse de Ni, 15 à 45% en masse de Cr, 6 à 8% en masse de Ta, 0,1% en masse ou moins de W, 0.05% en masse ou moins de C, l'équilibrage étant Co et les impuretés inévitables.

2. Matériau de réparation de brasage selon la revendication 1, dans lequel la poudre d'alliage non-fondu contient 0,001 à 0,01% en masse de C et 18 à 25% en masse de Cr.

3. Une méthode de réparation de brasage comprenant :
une étape d'inspection d'un matériau de base d'une partie de turbine à gaz dans laquelle un défaut incluant une fissure et de la corrosion est généré après avoir fait fonctionner la turbine à gaz, suivie par le démontage et le nettoyage d'une partie de la surface du matériau de base, puis en effectuant un traitement thermique en solution du matériau de base, suivi par l'écaillage de la partie de la surface et d'un fond d'une fissure pénétrante, suivi par l'élimination d'une couche d'oxyde de la partie de surface du matériau de base, et suivi par la réalisation d'un procédé préalable de TIG traitement anti-gouttes pour la fissure pénétrante;
une étape de formation d'un pourtour de prévention de flux pour un matériau de réparation de brasage autour d'une partie de réparation;
une étape de chargement du matériau de réparation de brasage selon l'une des revendications 1 ou 2 dans le pourtour de prévention de flot, le matériau de réparation de brasage comprenant un mélange de poudre d'alliage non-fondu ayant une composition similaire à celle du matériau de base et de poudre d'alliage fondu qui est fondu à une température de traitement thermique de diffusion;
une étape de réparation de brasage de répétition, une pluralité de fois, du traitement thermique de diffusion à une température égale ou inférieure à un point de fusion du matériau de base de la partie de turbine à gaz et égale ou supérieure à un point de fusion de la poudre d'alliage fondu, par ce moyen liant intégralement le matériau de réparation de brasage à la partie de réparation, et pour le compactage et la densification du matériau de réparation de brasage en effectuant un traitement thermique sous une atmosphère pressurisée ;
une étape consistant à effectuer un procédé de finition incluant une inspection d'une partie réparée au brasage, une opération de réparation supplémentaire d'une partie défectueuse partielle et un procédé de réparation d'un trou de refroidissement ;
une étape consistant à effectuer un traitement en solution et un traitement thermique de vieillissement de la partie réparée soumise au traitement de finition, et
une étape de réassemblage des parties de turbines à gaz réparées.

4. Méthode de réparation de brasage selon la revendication 3, dans laquelle un rapport de poids de la poudre d'alliage non-fondu du matériau de réparation de brasage et de la poudre d'alliage fondu est fixé à 0,8 ou plus, et un diamètre de particule de la poudre d'alliage non-fondu est fixé à deux fois ou plus celui de la poudre d'alliage fondu, en cela augmentant un degré de charge du matériau de réparation de brasage dans la partie de réparation, et augmentant la fluidité de la poudre d'alliage fondu dans la poudre d'alliage non-fondu dans la partie d'extrémité de pointe de la fissure.

5. Méthode de réparation de brasage selon la revendication 4, dans laquelle le rapport de poids de la poudre d'alliage non-fondu du matériau de réparation de brasage et de la poudre d'alliage fondu est fixé à 1 à 1,5.

6. Méthode de réparation de brasage selon la revendication 3, dans laquelle l'étape de réparation de brasage est effectuée en utilisant une méthode de compression isostatique à chaud (HIP) dans laquelle une température de chauffage est fixée à 1000°C ou plus et 1300°C ou moins, et une force de pressurisation est fixée à 1000 pressions atmosphériques ou plus et 2000 pressions atmosphériques ou moins, et le traitement en solution et le traitement de vieillissement sont effectuées après l'étape de réparation de brasage.

7. Méthode de réparation de brasage selon la revendication 6, dans laquelle la température de chauffage dans la méthode de compression isostatique à chaud (HIP) est fixée à 1100°C ou plus et 1260°C ou moins.

8. Méthode de réparation de brasage selon la revendication 3, dans laquelle une fissure est formée dans la portion de réparation, et la composition du matériau de réparation de brasage chargé dans la fissure devient plus proche d'une composition de la poudre d'alliage fondu vers une extrémité de pointe de la fissure à partir de la surface.

9. Méthode de réparation de brasage selon la revendication 3, dans laquelle comme méthode de chargement du matériau de réparation de brasage dans la partie de réparation, the matériau de réparation de brasage est transporté en utilisant un flot de gaz porteur à haute vitesse à 800°C ou moins auquel la poudre d'alliage n'est pas fondue ou oxydée, la vitesse de particule du matériau de réparation de brasage est fixée à 300m/s ou plus, et le matériau de réparation de brasage est collé à une partie de réparation ou chargé dans la fissure.
